(19) Europäisches Patentamt
European Patent Office
Office européen des brevets

(11) EP 4 130 116 B1

(12) **EUROPEAN PATENT SPECIFICATION**

(45) Date of publication and mention of the grant of the patent:
**13.12.2023 Bulletin 2023/50**

(21) Application number: **22186164.4**

(22) Date of filing: **21.07.2022**

(51) International Patent Classification (IPC):
***C08J 9/00*** *(2006.01)*

(52) Cooperative Patent Classification (CPC):
**C08J 9/0028;** C08J 2323/10; C08J 2323/14; C08J 2323/18

(54) **POLYPROPYLENE-BASED RESIN EXPANDED BEADS AND MOLDED ARTICLE OF POLYPROPYLENE-BASED RESIN EXPANDED BEADS**

POLYPROPYLENBASIERTE HARZEXPANDIERTE KÜGELCHEN UND FORMARTIKEL AUS POLYPROPYLENBASIERTEN HARZEXPANDIERTEN KÜGELCHEN

BILLES EXPANSÉES DE RÉSINE ET ARTICLE MOULÉ DE BILLES EXPANSÉES DE RÉSINE À BASE DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2021 JP 2021130042**

(43) Date of publication of application:
**08.02.2023 Bulletin 2023/06**

(73) Proprietor: **JSP Corporation**
**Chiyoda-ku, Tokyo 100-0005 (JP)**

(72) Inventors:
- **YAMASAKI, Shobu**
  **Kanuma-shi, 3220014 (JP)**
- **NOHARA, Tokunobu**
  **Yokkaichi-shi, 5100881 (JP)**

(74) Representative: **Gille Hrabal Partnerschaftsgesellschaft mbB**
**Patentanwälte**
**Brucknerstraße 20**
**40593 Düsseldorf (DE)**

(56) References cited:
**US-A1- 2004 256 757**
**US-A1- 2014 171 534**
**US-A1- 2015 210 815**
**US-A1- 2017 204 240**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to polypropylene-based resin expanded beads and a molded article of polypropylene-based resin expanded beads.

### Background of the Invention

A molded article of expanded beads obtained by in-mold molding of polypropylene-based resin expanded beads is excellent in chemical resistance, impact resistance and compression strain recovery performance, as compared with a molded article of polystyrene-based resin expanded beads. Consequently, a molded article of polypropylene-based resin expanded beads is utilized in a wide range of fields of food transport containers, packaging/buffering materials for electric/electronic components, vehicle members such as automobile bumpers, building members such as residential heat insulating materials, and miscellaneous goods, as shock absorbing materials, heat insulating materials, various packaging materials and others.

A molded article of polypropylene-based resin expanded beads has excellent properties as mentioned above, but, for example, in the case where it is used in severe environments to be exposed to sunlight for a long period of time, the resin may excessively degrade depending on the usage environments and the physical properties thereof may worsen. Accordingly, for preventing such degradation, there is employed an attempt of adding a weathering agent to enhance the weather resistance of a molded article.

For example, PTL 1 discloses, for the purpose of improving weather resistance in addition to fusion bonding properties and heat resistance, polypropylene-based resin expanded beads which contain a hindered amine compound and which satisfy a specific relationship between the heat of fusion at the endothermic peak on the high temperature side of the surface layer in the DSC curve of the surface layer and the internal foam layer and the heat of fusion at the endothermic peak on the high temperature side of the internal foam layer in the DSC curve of the surface layer and the internal foam layer.

In a further example, PTL 2 relates to expanded beads comprising phosphorus-based compounds and hindered amines as flame retardants.

### Citation List

#### Patent Literature

[PTL 1] JP2003-321567A
[PTL 2] US 2017/204240 A1

### Summary of the Invention

#### Technical Problem

In some cases, recently, based on the above-mentioned characteristics, polypropylene-based resin expanded beads have become used as a material for molded articles that are used in applications exposed outside, such as automobile members, building members and containers. Consequently, molded articles that can be used for a long period of time of a few years to many decades even under severe conditions are required. On the other hand, in some cases, long-term weather resistance could not be attained even when a weathering agent is added for improving weather resistance of molded articles, or in some other cases, adding a weather agent may lower mechanical properties such as tensile strength of molded articles. Therefore, there is room for improvement in obtaining molded articles excellent in physical properties while having high weather resistance. Consequently, polypropylene-based resin expanded beads are needed that can give molded articles having higher weather resistance than before and excellent in physical properties.

An object of the present invention is to provide polypropylene-based resin expanded beads capable of forming a molded article of expanded beads excellent in long-term weather resistance and excellent in mechanical properties, and a molded article of polypropylene-based resin expanded beads excellent in long-term weather resistance and excellent in mechanical properties.

Solution to Problem

The present inventors have assiduously studied and, as a result, have found that, by adding a specific amount of a hindered amine compound having a specific structure and a specific molecular weight to polypropylene-based resin expanded beads and a molded article thereof, the above-mentioned problems can be solved.
One embodiment of the present invention relates to polypropylene-based resin expanded beads described in [1] to [6] below and one embodiment of the present invention relates to a molded article of polypropylene-based resin expanded beads described in [7] to [9] below.

[1] Polypropylene-based resin expanded beads containing a hindered amine compound, wherein:

the hindered amine compound has a repeating unit represented by the following general formula (I), and the polystyrene-equivalent number-average molecular weight of the hindered amine compound is 1000 or more and 2000 or less, and
the content of the hindered amine compound in the polypropylene-based resin expanded beads is 0.01% by mass or more and 2% by mass or less:

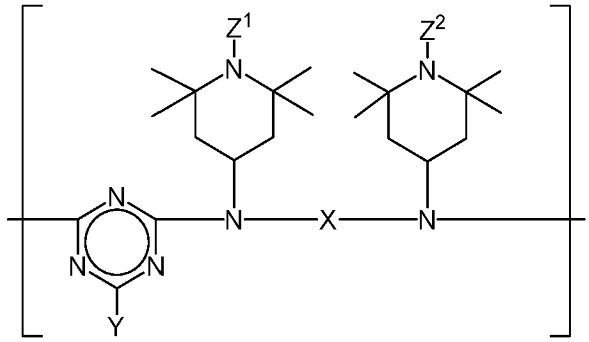

(I)

wherein X represents an alkylene group having 5 to 10 carbon atoms, Y represents an amino group, $Z^1$ and $Z^2$ each independently represent a hydrocarbon group, a hydrocarbon group bonding via an oxygen atom, or a hydrogen atom.

[2] The polypropylene-based resin expanded beads according to [1], wherein the hindered amine compound is a hindered amine compound of the general formula (I) wherein $Z^1$ and $Z^2$ each are an alkyl group.
[3] The polypropylene-based resin expanded beads according to [1] or [2], wherein Y in the general formula (I) is a morpholinyl group.
[4] The polypropylene-based resin expanded beads according to any one of [1] to [3], wherein the average cell diameter of the polypropylene-based resin expanded beads is 50 pm or more and 250 pm or less.
[5] The polypropylene-based resin expanded beads according to any one of [1] to [4], wherein the average surface layer thickness of the polypropylene-based resin expanded beads is 5 pm or more and 20 pm or less.
[6] The polypropylene-based resin expanded beads according to any one of [1] to [5], wherein the bulk density of the polypropylene-based resin expanded beads is 10 kg/m$^3$ or more and 500 kg/m$^3$ or less.
[7] A molded article of polypropylene-based resin expanded beads produced by in-mold molding the polypropylene-based resin expanded beads of any one of [1] to [6].
[8] The molded article of polypropylene-based resin expanded beads according to [7], wherein the density of the molded article of polypropylene-based resin expanded beads is 10 kg/m$^3$ or more and 100 kg/m$^3$ or less, and the ratio of the tensile strength of the molded article of polypropylene-based resin expanded beads to the density of the molded article of polypropylene-based resin expanded beads [tensile strength/density] is 0.16 MPa/[kg/m$^3$] or more.
[9] The molded article of polypropylene-based resin expanded beads according to [7] or [8], wherein the tensile elongation of the molded article of polypropylene-based resin expanded beads is 20% or more.

Advantageous Effects of the Invention

According to the present invention, there can be provided polypropylene-based resin expanded beads capable of forming a molded article of expanded beads excellent in long-term weather resistance and excellent in mechanical properties, and a molded article of polypropylene-based resin expanded beads excellent in long-term weather resistance and excellent in mechanical properties.

Detailed Description of the Invention

[Polypropylene-based resin expanded Beads]

The polypropylene-based resin expanded beads of the present invention are polypropylene-based resin expanded beads containing a hindered amine compound, wherein the hindered amine compound has a repeating unit represented by the following general formula (I), the polystyrene-equivalent number-average molecular weight of the hindered amine compound is 1000 or more and 2000 or less, and the content of the hindered amine compound in the polypropylene-based resin expanded beads is 0.01% by mass or more and 2% by mass or less.

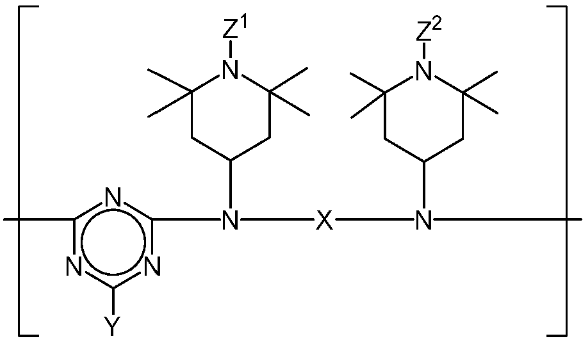

(I)

In the general formula(I), X represents an alkylene group having 5 to 10 carbon atoms, Y represents an amino group, $Z^1$ and $Z^2$ each independently represent a hydrocarbon group, a hydrocarbon group bonding via an oxygen atom, or a hydrogen atom.

(Polypropylene-based resin)

The polypropylene-based resin expanded beads are composed of a base resin containing a polypropylene-based resin as a main ingredient. In the present specification, "containing a polypropylene-based resin as a main ingredient" means that the content of the polypropylene-based resin in the base resin is 70% by mass or more, preferably 80% by mass or more, more preferably 90% by mass or more, even more preferably 95% by mass or more. The upper limit is not specifically limited, and is 100% by mass or less.

In the present invention, the polypropylene-based resin includes a propylene homopolymer, a propylene copolymer and a mixture thereof, and is preferably a propylene copolymer or a mixture of a propylene homopolymer and a propylene copolymer, more preferably a propylene copolymer.

In the case where the polypropylene-based resin is a propylene copolymer, or a mixture of a propylene homopolymer and a propylene copolymer, the content of the structural unit derived from propylene in the polypropylene-based resin is preferably 60% by mass or more, more preferably 70% by mass or more, even more preferably 80% by mass or more, further more preferably 90% by mass or more. The content of the structural unit derived from propylene in the polypropylene-based resin is preferably 99% by mass or less, more preferably 98% by mass or less, even more preferably 97% by mass or less, further more preferably 96% by mass or less.

As the propylene copolymer, there is exemplified a copolymer of propylene and ethylene or/and an $\alpha$-olefin having 4 to 20 carbon atoms such as 1-butene, 1-pentene, 1-hexene, 1-octene or 4-methyl-1-butene, and preferred is a copolymer of propylene and ethylene, or a copolymer of propylene and ethylene and 1-butene.

The melting point of the polypropylene-based resin is, from the viewpoint of enhancing the mechanical properties of the resultant molded articles, preferably 130°C or higher, more preferably 132°C or higher, even more preferably 135°C or higher. On the other hand, the melting point of the polypropylene-based resin is, from the viewpoint of enhancing the in-mold moldability of the expanded beads under a low molding pressure condition, preferably 155°C or lower, more preferably 150°C or lower, even more preferably 146°C or lower.

The melting point of the polypropylene-based resin is measured based on JIS K 7121:2012, using a test piece of the polypropylene-based resin or expanded beads thereof.

Specifically, for condition control of the test piece, "(2) a case of measuring a melting temperature after predetermined heat treatment" is employed, in which a test piece is heated from 23°C up to 200°C at a heating rate of 10°C/min under the condition of a nitrogen flow rate of 30 mL/min, then kept at the temperature for 10 minutes, cooled down to 23°C at a cooling rate of 10°C/min, and again heated up to 200°C at a heating rate of 10°C/min to draw a DSC curve (DSC curve at the time of second heating). Next, the peak temperature of the melting peak on the DSC curve is read, and the value can be referred to as the melting point of the polypropylene-based resin.

In the case where plural melting peaks appear on the DSC curve, the peak temperature of the melting peak having a highest melting peak height on the basis of the baseline is employed as the melting point.

The melt flow rate (MFR: JIS K 7210-1:2014, 230°C, load 2.16 kg) of the polypropylene-based resin is preferably 2 to 10 g/10 min, more preferably 5 to 9 g/10 min.

(Hindered Amine Compound)

The hindered amine compound contained in the polypropylene-based resin expanded beads of the present invention has a repeating unit represented by the following general formula (I), and the polystyrene-equivalent number-average molecular weight of the hindered amine compound is 1000 or more and 2000 or less.

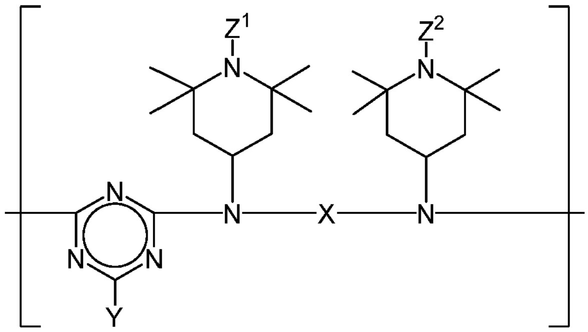

(I)

In the general formula (I), X represents an alkylene group having 5 to 10 carbon atoms, Y represents an amino group, $Z^1$ and $Z^2$ each independently represent a hydrocarbon group, a hydrocarbon group bonding via an oxygen atom, or a hydrogen atom.

The polypropylene-based resin expanded beads of the present invention contain a specific amount of the hindered amine compound, and therefore, the resultant molded article of expanded beads can be excellent in long-term weather resistant and excellent in mechanical properties. Though not clear, the reason can be considered as follows.

The hindered amine compound has, in the structure, a 2,2,6,6-tetramethyl-4-piperidineamine moiety represented by the general formula (II), and is therefore considered to consume radicals that are formed especially by light to be able to prevent molecular chain cleavage (molecular weight reduction) of the resin by oxidation. Also in the structure, the compound has a triazine moiety represented by the general formula (III) and has an alkylene moiety having a relatively long carbon chain represented by X in the general formula (I), and has a relatively large molecular weight, and is therefore considered to be able to be prevented from bleeding out from the resin. By these, it is considered that the resultant molded article of expanded beads can be given long-term weather resistance.

Further, an inorganic dispersant can hardly coordinate with the nitrogen atom positioned in the triazine moiety or at both ends of the alkylene moiety, and therefore, when the resin particles are expanded, an inorganic dispersant in the dispersing medium can be prevented from adhering to the surfaces of the expanded beads and, as a result, the fusion bonding properties of the expanded beads are considered to increase. By these, it is considered that a molded article excellent in mechanical properties can be obtained.

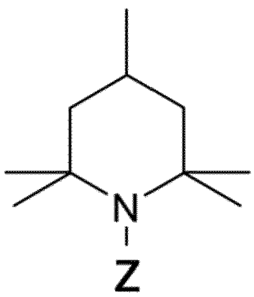

(II)

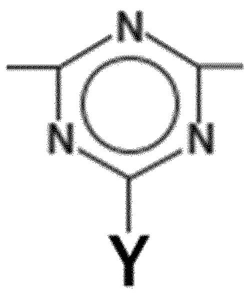

(III)

In the general formula (II), Z represents a hydrocarbon group, a hydrocarbon group bonding via an oxygen atom, or a hydrogen atom. In the general formula (III), Y represents an amino group.

In the general formula (I), X represents an alkylene group having 5 to 10 carbon atoms. X is preferably an alkylene group having 5 to 8 carbon atoms, more preferably an alkylene group having 6 carbon atoms (hexamethylene group).

In the general formula (I), Y represents an amino group. Y is preferably a secondary amino group or a tertiary amino group, more preferably a tertiary amino group. In the case where Y is a tertiary amino group, Y is preferably a dialkylamino group or a morpholinyl group, more preferably a morpholinyl group. When Y is a morpholinyl group, the resultant molded article of expanded beads can be given stable long-term weather resistance.

In the general formula (I), $Z^1$ and $Z^2$ each independently represent a hydrocarbon group, a hydrocarbon group bonding via an oxygen atom, or a hydrogen atom. The hydrocarbon group includes an alkyl group and a cycloalkyl group. The hydrocarbon group bonding via an oxygen atom includes an alkoxy group. $Z^1$ is preferably an alkyl group or a hydrogen atom, more preferably an alkyl group, even more preferably an alkyl group having 1 to 4 carbon atoms, further more preferably a methyl group. $Z^2$ is preferably an alkyl group or a hydrogen atom, more preferably an alkyl group, even more preferably an alkyl group having 1 to 4 carbon atoms, further more preferably a methyl group. $Z^1$ and $Z^2$ may be the same or different, but are preferably the same.

Specifically, $Z^1$ and $Z^2$ are preferably both hydrocarbon groups or both hydrogen atoms, more preferably both alkyl groups or both hydrogen atoms, even more preferably both alkyl group, further more preferably both alkyl groups having 1 to 4 carbon atoms, further more preferably both methyl groups. Specifically, $Z^1$ and $Z^2$ in the general formula (I) are preferably both alkyl groups, more preferably both alkyl groups having 1 to 4 carbon atoms, even more preferably $Z^1$ and $Z^2$ in the general formula (I) are both methyl groups.

A hindered amine compound having a structure represented by the general formula (II) where Z is an alkyl group is called an NR-type hindered amine. Heretofore, when an NR-type hindered amine is used, a molded article excellent in weather resistance could not be obtained as compared with the case using an NH-type hindered amine or an NOR-type hindered amine. An NH-type hindered amine is a hindered amine compound having a structure of the general formula (II) where Z is a hydrogen atom (>NH), and an NOR-type hindered amine is, for example, a hindered amine compound having a structure of the general formula (II) where Z is an alkoxy group (>NOR).

On the other hand, the hindered amine compound for use in the polypropylene-based resin expanded beads of the present invention has a structure represented by the general formula (I), and therefore it is considered that a molded article of expanded beads can be obtained, in which the fusion bonding properties of the expanded beads are good and which is therefore excellent in mechanical properties and can also be excellent in long-term weather resistance.

Of the hindered amine compound for use in the polypropylene-based resin expanded beads of the present invention, a hindered amine compound of the general formula (I) where $Z^1$ and $Z^2$ are alkyl groups is an NR-type hindered amine. An NH-type hindered amine is a hindered amine compound having a structure of the general formula (I) where $Z^1$ and $Z^2$ are hydrogen atoms (>NH), and an NOR-type hindered amine is a hindered amine compound having a structure of the general formula (I) where $Z^1$ and $Z^2$ are hydrocarbon groups bonding via an oxygen atom (>NOR).

The polystyrene-equivalent number-average molecular weight of the hindered amine compound is 1000 or more and 2000 or less. When the polystyrene-equivalent number-average molecular weight falls within the above range, the hindered amine compound disperses well in the resin and the hindered amine compound hardly bleeds out from the molded article, and therefore the molded article can stably express long-term weather resistance.

From the viewpoint of preventing bleeding out from the molded article, the polystyrene-equivalent number-average molecular weight of the hindered amine compound is preferably 1200 or more, more preferably 1500 or more. From the viewpoint of bettering the dispersion condition of the hindered amine compound in the resin to form expanded beads having a uniform cell size, the polystyrene-equivalent number-average molecular weight of the hindered amine compound is preferably 1900 or less, more preferably 1800 or less. The polystyrene-equivalent number-average molecular weight of the hindered amine compound is a number-average molecular weight calculated by gel permeation chromatography (GPC) using monodisperse polystyrene as a standard substance. For example, it can be determined by the following method. A hindered amine compound solution is obtained by dissolving 10 mg of a hindered amine compound in 10 mL of tetrahydrofuran. Using a gel permeation chromatograph GPC-LC3A Model by Shimadzu Corporation and a differential refractometer detector RID-4 Model by Shimadzu Corporation, the above solution is measured through a column Shim-pack GPC-802 by Shimadzu Corporation under the measurement conditions of a column temperature 23°C and a flow rate 1 mL/min to obtain a chromatogram. A differential molecular weight distribution curve is obtained by converting the retention time in the chromatogram to molecular weight by means of a calibration curve prepared using standard polystyrene. From the differential molecular weight distribution curve, the number-average molecular weight of the hindered amine compound can be calculated.

The hindered amine compound may have at least one repeating unit represented by the general formula (I), and may have two or more such repeating units. The compound may also be a mixture of those each having a different number of repeating units represented by the general formula (I).

The number of the repeating unit represented by the general formula (I) of the hindered amine compound is preferably 2 or more and 5 or less. A terminal group on the triazine moiety side of the hindered amine compound is preferably a hydroxy group or Y in the general formula (I). A terminal group on the alkylene moiety side of the hindered amine compound is preferably a hydrogen atom or the triazine moiety represented by the general formula (III) in the general formula (I) (provided that, in the triazine moiety, a substituent of carbon not bound to nitrogen atom is a hydroxy

group or Y in the general formula (I)).

The hindered amine compound may be a single compound so far as the compound has a repeating unit represented by the general formula (I) and has a polystyrene-equivalent number average molecular weight of 1000 or more and 2000 or less, or may also be a mixture of plural such compounds. In the case of using a mixture of plural such compounds, the polystyrene-equivalent number average molecular weight of the hindered amine compound to be employed herein is an arithmetic mean value of molecular weights as calculated based on the molecular weight of each compound and the mass ratio of the compounds.

The content of the hindered amine compound in the polypropylene-based resin expanded beads of the present invention is 0.01% by mass or more and 2% by mass or less. The content of the hindered amine compound in the polypropylene-based resin expanded beads is preferably 0.1% by mass or more, more preferably 0.3% by mass or more, even more preferably 0.5% by mass or more, further more preferably 0.8% by mass or more. The content of the hindered amine compound in the polypropylene-based resin expanded beads is preferably 2% by mass or less, more preferably 1.5% by mass or less. When the content of the hindered amine compound falls within the range, a molded article of expanded beads excellent in long-term weather resistance and also excellent in mechanical properties such as tensile strength can be obtained. Especially when the content is too small, long-term weather resistance may lower, and when the content is too large, mechanical properties such as tensile strength may lower.

The content of the hindered amine compound in the expanded beads can be calculated, for example, by proton nuclear magnetic resonance ($^1$H-NMR) measurement of expanded beads.

Specifically, the following method can be employed. First, expanded beads are frozen and crushed, and about 2 g thereof is measured. Next, the expanded beads that had been frozen and crushed are subjected to Soxhlet extraction using chloroform as a solvent to remove the chloroform-insoluble polymer component. Next, the chloroform-soluble part obtained in Soxhlet extraction is mixed with acetone, and the acetone-insoluble part is removed. The solvent is removed from the acetone-soluble part, and the resultant solid is used as a measurement sample. The sample is subjected to proton nuclear magnetic resonance ($^1$H-NMR), and the content is calculated from the integral ratio to the standard product (internal standard sample) having a known concentration.

For proton nuclear magnetic resonance ($^1$H-NMR), for example, AL-400 Model by JEOL Corporation can be used. Measurement conditions of solvent: $CDCl_3$ and internal standard sample: tetrachloroethane (TCE) can be employed.

(Properties and Composition of Polypropylene-based resin expanded Beads)

The polypropylene-based resin expanded beads of the present invention contain, as mentioned above, a specific hindered amine compound, and preferably have the following properties.

The average cell diameter of the polypropylene-based resin expanded beads of the present invention is preferably 50 pm or more and 250 pm or less. The average cell diameter of the polypropylene-based resin expanded beads of the present invention is more preferably 60 pm or more, even more preferably 65 pm or more. The average cell diameter of the polypropylene-based resin expanded beads of the present invention is more preferably 200 pm or less, even more preferably 150 pm or less, further more preferably 120 pm or less. When the average cell diameter of the expanded beads falls within the range, the expanded beads can be excellent in in-mold moldability and can stably give a molded article of expanded beads excellent in mechanical properties and exhibiting long-term excellent weather resistance. In addition, when the average cell diameter of the expanded beads falls within the range, the time necessary for cooling in taking out the molded article from the mold in in-mold molding can be shortened, and expanded beads excellent in molding cycle can be obtained.

The average cell diameter can be determined by drawing plural line segments each running from the outermost surface of an expanded bead to the outermost surface on the opposite side thereof passing through the center part, on an enlarged picture of a cross section of an expanded bead divided into two, followed by dividing the number of the cells crossing each line segment by the total length of the line segment. Specifically, for the measurement, the method described in the section of Examples is referred to.

The average cell diameter of the expanded beads can be controlled to fall within a desired range, for example, by controlling the kind and the amount of the cell controlling agent to be added to the resin particles and the amount of the hindered amine compound to be added thereto, or by controlling the expanding pressure in expanding the resin particles.

The average surface layer thickness of the polypropylene-based resin expanded beads of the present invention is preferably 5 μm or more and 20 pm or less. The average surface layer thickness of the polypropylene-based resin expanded beads of the present invention is more preferably 7 pm or more, even more preferably 8 pm or more, further more preferably 9 pm or more. Also the average surface layer thickness of the polypropylene-based resin expanded beads of the present invention is more preferably 18 pm or less, even more preferably 15 pm or less, further more preferably 13 pm or less. When the average surface layer thickness of the expanded beads falls within the range, the

expanded beads can be excellent in in-mold moldability, and can stably give a molded article of expanded beads excellent in mechanical properties and exhibiting long-term excellent weather resistance. In addition, when the average surface layer thickness of the expanded beads falls within the range, the time necessary for cooling in taking out the molded article from the mold in in-mold molding can be shortened, and expanded beads excellent in molding cycle can be obtained.

The average surface layer thickness can be determined by drawing plural line segments each running from the outermost surface of an expanded bead to the outermost surface on the opposite side thereof passing through the center part, on an enlarged picture of a cross section of an expanded bead divided into two, then measuring the length from the outermost surface of each expanded bead to the end on the outermost surface side of the cell existing on the outermost surface side of the expanded bead, and arithmetically averaging the resultant data. Specifically, for the measurement, the method described in the section of Examples is referred to.

The average surface layer thickness of the expanded beads can be controlled to fall within a desired range, for example, by controlling the kind and the amount of the cell controlling agent to be added to the resin particles and the amount of the hindered amine compound to be added thereto, or by controlling the inner pressure of the closed vessel in expanding the resin particles.

The bulk density of the polypropylene-based resin expanded beads of the present invention is preferably 10 $kg/m^3$ or more and 500 $kg/m^3$ or less. The bulk density of the polypropylene-based resin expanded beads of the present invention is more preferably 12 $kg/m^3$ or more, even more preferably 15 $kg/m^3$ or more. The bulk density of the polypropylene-based resin expanded beads of the present invention is more preferably 200 $kg/m^3$ or less, even more preferably 100 $kg/m^3$ or less, further more preferably 50 $kg/m^3$ or less. The bulk density of the expanded beads falling within the range is preferred, since a molded article of expanded beads light and excellent in mechanical properties can be obtained.

The bulk density can be measured according to the method described in the section of Examples.

Preferably, the polypropylene-based resin expanded beads of the present invention have at least one melting peak (high-temperature peak) on the high temperature side of the melting peaks intrinsic to the polypropylene-based resin (resin-intrinsic peaks), on a DSC curve drawn in differential scanning calorimetry (DSC) according to JIS K7122-1987.

These melting peaks can be detected according to the following method.

Specifically, using a differential scanning calorimeter, 1 to 3 mg of expanded beads are heated from 23°C up to 200°C at a heating rate of 10°C/min to draw a DSC curve, and the melting peak (high-temperature peak) can be confirmed on the DSC curve. A peak having a maximum heat of fusion is referred to as a melting peak intrinsic to the polypropylene-based resin (resin-intrinsic peak), and a melting peak appearing on the higher temperature side is referred to as a high-temperature peak.

The DSC curve in that case means a DSC curve (DSC curve in the first heating) drawn by heating the expanded beads according to the above-mentioned measurement method. An endothermic peak intrinsic to resin (resin-intrinsic peak) means an endothermic peak by melting of crystal intrinsic to the polypropylene-based resin that constitutes the expanded beads. It is considered that the resin-intrinsic peak is an endothermic peak due to absorption of heat associated with melting of crystal that the polypropylene-based resin constituting the expanded beads generally has.

On the other hand, the endothermic peak (high-temperature peak) on the high-temperature side of the resin-intrinsic peaks are endothermic peaks appearing on the higher temperature side than the resin-intrinsic peaks on the first DSC curve. In the case where the high-temperature peak appears, it is considered that secondary crystals may exist in the resin. On the DSC curve (DSC curve on the second heating) drawn by heating the expanded beads from 23°C up to 200°C at a heating rate of 10°C/min (first heating), then cooling them from 200°C down to 23°C at a cooling rate of 10°C/min, and thereafter again heating them from 23°C up to 200°C at a heating rate of 10°C/min (second heating), only an endothermic peak appears by melting of crystal intrinsic to the polypropylene-based resin that constitutes the expanded beads. The resin-intrinsic peak appears on the DSC curve in the first heating and also on the DSC curve in the second heating, and the peak temperature may somewhat differ between the first time and the second time, but in general, the difference is less than 5°C. With that, it can be confirmed that which peak is the resin-intrinsic peak.

Preferably, on the DSC curve drawn in the second heating in heating the expanded beads from 23°C up to 200°C at a heating rate of 10°C/min, then cooling them from 200°C down to 23°C at a cooling rate of 10°C/min, and thereafter again heating them from 23°C up to 200°C at a heating rate of 10°C/min, only a melting peak (intrinsic peak) intrinsic to the polypropylene-based resin appears on the DSC curve drawn in the second heating.

The heat of fusion at the high-temperature peak of the polypropylene-based resin expanded beads of the present invention is preferably 5 to 40 J/g, more preferably 7 to 30 J/g, even more preferably 10 to 20 J/g.

The heat of fusion at the high-temperature peak of the expanded beads falling within the range is preferred, since a molding condition range capable of giving a good molded article of expanded beads can be broadened.

The heat of fusion at the high-temperature peak can be measured according to the above-mentioned method, and more specifically, it can be measured according to the method described in the section of Examples.

The total heat of fusion of the polypropylene-based resin expanded beads of the present invention is the sum

of the heat of fusion of all the melting peaks (endothermic peaks) appearing on the first DSC curve. The total heat of fusion of the polypropylene-based resin expanded beads of the present invention is preferably 25 to 200 J/g, more preferably 35 to 150 J/g, even more preferably 50 to 100 J/g. The total heat of fusion of the expanded beads falling within the range is preferred, since expanded beads excellent in the balance between the in-mold moldability thereof and the physical properties of the resultant molded article can be stably obtained.

The total heat of fusion can be measured according to the method described in the section of Examples.

Preferably, the polypropylene-based resin expanded beads of the present invention are expanded beads produced by expanding resin particles not surface-modified with an organic peroxide. In that case, expanded beads that enable in-mold molding under a relatively low molding pressure can be produced with high productivity.

From the viewpoint, preferably, the polypropylene-based resin expanded beads of the present invention have at least one melting peak (high-temperature peak) on the high-temperature side of the melting peaks (resin-intrinsic peaks) intrinsic to the polypropylene-based resin, and satisfy a relationship of the following formula (1).

$$\Delta Hs \geq \Delta Hi \times 0.86 \qquad (1)$$

In the formula (1), $\Delta Hs$ is a heat of fusion at the high-temperature peak of a surface part of the expanded beads, and $\Delta Hi$ is a heat of fusion at the high-temperature peak of an inner part of the expanded beads.

From the viewpoint of enabling in-mold molding under a relatively low molding pressure and stably producing a molded article having good physical properties, preferably, the melting point of the polypropylene-based resin that constitutes the expanded beads is 155°C or lower and the expanded beads satisfy the formula (1) and the following formula (2).

$$\Delta Hi \times 1.2 \geq \Delta Hs \qquad (2)$$

$\Delta Hs$ can be measured according to the same method as the measurement method for the heat of fusion at the high-temperature peak of the polypropylene-based resin expanded beads, except that a sample cut out of the surface part of the expanded bead is used. $\Delta Hi$ can be measured according to the same method as the measurement method for the heat of fusion at the high-temperature peak of the polypropylene-based resin expanded beads, except that a sample cut out from the expanded bead so as not to include the surface part thereof is used.

The surface part of the expanded beads means a part included in a range from the surface of the expanded bead to a depth of 200 pm toward the gravity center of the expanded bead. In preparing the sample, a sample of the surface part or the inner part is cut out from plural expanded beads to prepare a predetermined amount of samples, and these may be used for the measurement.

An average mass per one bead (arithmetic average per one bead calculated by measuring the mass of 200 randomly chosen beads) of the polypropylene-based resin expanded beads of the present invention is preferably 0.1 to 20 mg, more preferably 0.2 to 10 mg, even more preferably 0.3 to 5 mg, further more preferably 0.4 to 2 mg.

Additives may be added to the polypropylene-based resin expanded beads of the present invention within a range not detracting from the advantageous effects of the present invention. Examples of the additives include an antioxidant, a UV absorbent (ultraviolet absorbing agent), an antistatic agent, a flame retardant, a pigment, a dye and a cell controlling agent. For example, these additives can be contained in the expanded beads by adding them in a step of producing the resin particles.

Examples of the cell controlling agent usable herein include an inorganic powder and an organic powder. The inorganic powder includes a metal borate such as zinc borate and magnesium borate. The organic powder includes a fluorine resin powder such as polytetrafluoroethylene (PTFE).

From the viewpoint of stably producing expanded beads having a desired bulk density and having a less fluctuating cell size, the blending amount of the cell controlling agent in the resin particles is preferably 50 ppm by mass or more and 5000 ppm by mass or less, more preferably 100 ppm by mass or more and 2000 ppm by mass or less, even more preferably 150 ppm by mass or more and 1500 ppm by mass or less.

From the viewpoint of easily controlling the average cell diameter and the average surface layer thickness of the expanded beads to fall within a desired range, a metal borate is preferably used as the cell controlling agent, and zinc borate is more preferred. In the case of using zinc borate, the arithmetic average particle diameter by number is preferably 0.5 pm or more and 10 pm or less, more preferably 1 pm or more and 8 pm or less.

The arithmetic average particle diameter by number of zinc borate is determined by converting the particle diameter distribution by volume as measured according to a laser diffraction scattering method to a particle diameter distribution by number, on the assumption that the shape of the particles is spherical, to give a particle diameter distribution by number, and arithmetically averaging the particle diameter data based on the particle diameter distribution by number.

The particle diameter means a diameter of a hypothetical sphere having the same volume as that of the particle.

From the viewpoint of giving a good appearance to the molded article, the polypropylene-based resin expanded beads of the present invention preferably contain a pigment. In particular, from the viewpoint of giving a good black appearance thereto, the pigment is preferably carbon black.

In the case where the expanded beads contain carbon black, the content of carbon black in the expanded beads is preferably 0.1% by mass or more and 5% by mass or less, in the polypropylene-based resin expanded beads, more preferably 0.5% by mass or more, even more preferably 1% by mass or more, further more preferably 2% by mass or more. Also more preferably, the content is 4% by mass or less, even more preferably 3% by mass or less.

In a carbon black-containing, molded article of expanded beads produced by using expanded beads containing carbon black, the fusion bonding properties of the expanded beads generally tend to lower. In addition, owing to the influence of easiness of heat accumulation by exposure to sunlight, the effect of a hindered amine compound may lower and long-term weather resistance therefore tends to lower. However, the polypropylene-based resin expanded beads of the present invention that contain carbon black within the above-mentioned range can stably form a molded article of expanded beads having a good black appearance, excellent in mechanical properties and exhibiting excellent long-term weather resistance.

Examples of carbon black usable herein include channel black, roller black, furnace black, thermal black, and acetylene black.

From the viewpoint of stably obtaining a molded article of expanded beads having a good black appearance, excellent in mechanical properties and exhibiting excellent long-term weather resistance, in the case where the expanded beads contain carbon black, the ratio by mass of the hindered amine compound relative to carbon black in the expanded beads is preferably 0.002 to 2, more preferably 0.05 to 1, even more preferably 0.1 to 0.6.

Also from the viewpoint of stably obtaining a molded article of expanded beads having a good black appearance, excellent in mechanical properties and exhibiting excellent long-term weather resistance, the primary particle diameter of carbon black is preferably 10 to 100 nm. Also preferably, carbon black is furnace black obtained according to a furnace method.

The polypropylene-based resin expanded beads of the present invention may contain a UV absorbent. Examples of the UV absorbent include a benzophenone compound and a benzotriazole compound. The benzophenone compound includes 2-hydroxy-4-octyloxybenzophenone; and the benzotriazole compound includes 2-(5-methyl-2-hydroxyphenyl)benzotriazole, 2-[2-hydroxy-3,5-bis($\alpha$,$\alpha$-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, and 2-(2'-hydroxy-5'-t-octylphenyl)benzotriazole.

From the viewpoint of stably obtaining a molded article of expanded beads that exhibits excellent long-term weather resistance, the content of the UV absorbent in the expanded beads is preferably 0.01% by mass or more and 2% by mass or less, more preferably 0.05% by mass or more and 1% by mass or less, even more preferably 0.1% by mass or more and 0.8% by mass or less. From the viewpoint of the ability to stably obtain a molded article of expanded beads that exhibits excellent long-term weather resistance without seriously deteriorating the in-mold moldability, the ratio by mass of the UV absorbent to the hindered amine compound in the expanded beads is preferably 0.6 or more and 5 or less, more preferably 0.7 or more and 3 or less, even more preferably 0.8 or more and 2 or less.

The UV absorbent is a compound that has the property of absorbing ultraviolet light. The UV absorbent can mainly absorb light with a wavelength of 300 to 400 nm.

The content of the UV absorbent in the expanded beads can be calculated by analyzing the expanded beads, for example, by proton nuclear magnetic resonance ($^1$H-NMR), like that of the hindered amine compound in the expanded beads.

The polypropylene-based resin expanded beads of the present invention may contain any other resin or elastomer than the polypropylene-based resin within a range not detracting from the object and the advantageous effects of the present invention. Specifically, the resin beads may contain any other resin or elastomer than the above-mentioned propylene homopolymer or the above-mentioned propylene copolymer.

The content of the other resin or elastomer than the polypropylene-based resin in the polypropylene-based resin expanded beads is preferably 20 parts by mass or less relative to 100 parts by mass of the polypropylene-based resin, more preferably 10 parts by mass or less, even more preferably 5 parts by mass or less, further more preferably 1 part by mass or less.

The polypropylene-based resin expanded beads of the present invention can have a fusion-bonding layer on the surface thereof for enhancing the fusion-bonding properties between the expanded beads during in-mold molding. The fusion-bonding layer may be present on the entire surface or a part of the surface of the expanded beads. Examples of the resin to constitute the fusion-bonding layer include a crystalline polyolefin resin having a melting point lower than the melting point of the polypropylene-based resin constituting the expanded beads, an amorphous polyolefin resin having a softening point lower than the melting point of the polypropylene-based resin constituting the expanded beads, and an adhesive resin such as a urethane resin.

The method for forming the fusion-bonding layer on the surface of the expanded beads is not particularly limited, and examples thereof include a method for expanding resin particles having a fusion-bonding layer, and a method for adhering a fusion-bonding layer to expanded beads after obtaining the expanded beads. When resin particles having a fusion-bonding layer are expanded to obtain expanded beads, it is preferable to employ a method of disposing a fusion-bonding layer on the surfaces of resin particles by co-extrusion when producing resin particles.

[Production Method for Polypropylene-based resin expanded Beads]

The production method for the polypropylene-based resin expanded beads of the present invention is not specifically limited so far as, as mentioned above, the polypropylene-based resin expanded beads contain a hindered amine compound, and the hindered amine compound has a repeating unit represented by the above-mentioned general formula (I), the polystyrene-equivalent number-average molecular weight of the hindered amine compound is 1000 or more and 2000 or less, and the content of the hindered amine compound in the polypropylene-based resin expanded beads is 0.01% by mass or more and 2% by mass or less. Such expanded beads can be produced, for example, by discharged polypropylene-based resin particles that contain a blowing agent and a hindered amine compound, as dispersed in an aqueous medium in a container, from the container to under a pressure atmosphere lower than the pressure inside the container along with the aqueous medium to expand the resin particles. One preferred example of the production method is described below.

A preferred production method for the polypropylene-based resin expanded beads of the present invention includes a dispersion step of dispersing propylene-based resin particles containing a hindered amine compound in an aqueous medium containing an inorganic dispersant in a container, a blowing agent impregnation step of impregnating a blowing agent into the polypropylene-based resin particles in the container, and an expanding step of discharging the blowing agent-containing polypropylene-based resin particles out of the container along with the aqueous medium to thereby expand the particles.

Specifically, a preferred production method for the polypropylene-based resin expanded beads of the present invention is a production method for polypropylene-based resin expanded beads that includes a dispersion step of dispersing propylene-based resin particles containing a hindered amine compound in an aqueous medium containing an inorganic dispersant in a container, a blowing agent impregnation step of impregnating a blowing agent into the polypropylene-based resin particles in the container and expanding step of discharging the blowing agent-containing polypropylene-based resin particles out of the container along with the aqueous medium to thereby expand the particles, in which the hindered amine compound has a structure represented by the general formula (I), the polystyrene-equivalent number-average molecular weight of the hindered amine compound is 1000 or more and 2000 or less, and the content of the hindered amine compound in the polypropylene-based resin expanded beads is 0.01% by mass or more and 2% by mass or less.

(Production of Polypropylene-based resin particles)

The resin particles for use in production of the polypropylene-based resin expanded beads of the present invention can be obtained by feeding a polypropylene-based resin, a hindered amine compound and other optional additives such as a cell controlling agent, a pigment and a UV absorbent into an extruder, heating and kneading them to give a resin melt, and thereafter extruding the resin melt out of the extruder, while pelletizing it in a strand cutting system, a hot cutting system or an underwater cutting system.

The average mass per one particle (arithmetic average per one particle calculated by measuring the mass of 200 randomly chosen particles) of the resin particles is preferably so controlled as to be 0.1 to 20 mg, more preferably 0.2 to 10 mg, even more preferably 0.3 to 5 mg, further more preferably 0.4 to 2 mg. The outer shape of the particles is not specifically limited so far as it falls within a range capable of attaining the intended object of the present invention, but is preferably columnar.

In the case where the outer shape of the resin particles is columnar, the particle diameter (length in the extrusion direction) of the resin particles is preferably 0.1 to 3.0 mm, more preferably 0.3 to 1.5 mm. The ratio of the length in the extrusion direction of the resin particles to the length in the direction perpendicular to the extrusion direction of the resin particles (diameter of the resin particles), ratio of length/diameter is preferably 0.5 to 5.0, more preferably 1.0 to 3.0.

In a strand cutting method, the particle diameter, the ratio of length/diameter and the average mass of the resin particles can be controlled by appropriately changing the extrusion rate, the take-up rate and the cutter speed in extruding the resin melt to cut it.

(Production of Polypropylene-based resin expanded Beads)

A preferred production method for the polypropylene-based resin expanded beads of the present invention

includes a dispersion step of dispersing hindered amine compound-containing polypropylene-based resin particles in an inorganic dispersant-containing aqueous medium in a container, a blowing agent impregnation step of impregnating a blowing agent in the polypropylene-based resin particles in the container, and an expanding step of discharging the blowing agent-containing polypropylene-based resin particles out of the container along with the aqueous medium to expand them, and preferably the method includes these steps in that order.

The preferred production method for the polypropylene-based resin expanded beads of the present invention includes, as the first step, a dispersion step of dispersing hindered amine compound-containing polypropylene-based resin particles in an inorganic dispersant-containing aqueous medium in a container.

As the dispersing medium for dispersing the resin particles obtained in the manner as above, in a closed vessel, an aqueous dispersing medium is used. The aqueous dispersing medium is a dispersing medium that contains water as a main ingredient. The proportion of water in the aqueous dispersing medium is preferably 70% by mass or more, more preferably 80% by mass or more, even more preferably 90% by mass or more, and may be 100% by mass. The other dispersing medium than water in the aqueous dispersing medium includes ethylene glycol, glycerin, methanol and ethanol.

From the viewpoint of the ability to produce, with high productivity, expanded beads that enable in-mold molding under a relatively low molding pressure and can stably form a molded article having good physical properties, it is preferable that any organic peroxide is not added to the aqueous medium.

In the dispersing medium-discharging expanding method of an expanding method of discharging blowing agent-containing polypropylene-based resin particles out of a container along with an aqueous medium, which is favorably employed in the present invention, preferably, a dispersant is added to the dispersing medium, so that the polypropylene-based resin particles heated in the container do not fuse with one another in the container. The dispersant may be any one capable of preventing polypropylene-based resin particles from fusing in a container, and any of an organic dispersant and an inorganic dispersant is usable. However, an inorganic dispersant is preferred, and a fine particulate inorganic dispersant is more preferred in view of easy handleability. Examples include a natural or synthetic clay mineral such as kaolin, mica and clay, and aluminum oxide, titanium oxide, basic magnesium carbonate, basic zinc carbonate, calcium carbonate and iron oxide. One or more of these may be used either singly or as combined. Above all, a natural or synthetic clay mineral is preferred. The amount of the dispersant to be added is preferably 0.001 to 5 parts by mass per 100 parts by mass of the resin particles.

Depending on the kind of the hindered amine compound to be incorporated in the resin particles, the inorganic dispersant in the dispersing medium may easily adhere to the surfaces of the resin particles and the inorganic dispersant adhering to the surfaces of the resultant expanded beads increases so that the fusion bonding properties of the expanded beads in in-mold molding may worsen. On the other hand, in the present invention, a specific hindered amine compound is used, and therefore a molded article having good fusion bonding properties, excellent in mechanical properties and having long-term weather resistance can be obtained.

In the case where the dispersant is used, preferably, an anionic surfactant such as sodium dodecylbenzenesulfonate, sodium alkylsulfonate or sodium oleate is used together therewith, as an auxiliary dispersant. Preferably, the auxiliary dispersant is added in an amount of approximately 0.001 to 1 part by mass per 100 parts by mass of the resin particles.

The preferred production method for the polypropylene-based resin expanded beads of the present invention includes, after the dispersion step, a blowing agent impregnation step of impregnating a blowing agent in the polypropylene-based resin particles in the container.

The blowing agent for use for expanding the polypropylene-based resin particles is preferably a physical blowing agent. The physical blowing agent includes an inorganic physical blowing agent and an organic physical blowing agent, and the inorganic physical blowing agent includes carbon dioxide, air, nitrogen, helium and argon. The organic physical blowing agent includes an aliphatic hydrocarbon such as propane, n-butane, i-butane, n-pentane, i-pentane and hexane, a cycloaliphatic hydrocarbon such as cyclopentane and cyclohexane, and a halogenated hydrocarbon such as chlorofluoromethane, trifluoromethane, 1,1-difluoroethane, 1-chloro-1,1-difluoroethane, 1,1,1,2-tetrafluoroethane, methyl chloride, ethyl chloride and methylene chloride. One alone or two or more physical blowing agents may be used either singly or as combined. An inorganic physical blowing agent and an organic physical blowing agent may be mixed and used here. The blowing agent for use in the production method is, from the viewpoint of an environmental load and handleability, preferably an inorganic physical blowing agent, more preferably carbon dioxide.

The amount of the blowing agent to be added is preferably 0.1 to 30 parts by mass relative to 100 parts by mass of the resin particles, more preferably 0.5 to 15 parts by mass.

The method for impregnating the blowing agent in the resin particles in the expanded beads production step is preferably a method including dispersing the resin particles in an aqueous dispersing medium in a closed vessel while injecting a blowing agent under pressure into the closed vessel and keeping the closed vessel at a predetermined temperature under a predetermined pressure to thereby impregnate the blowing agent in the resin particles.

The preferred method for producing the polypropylene-based resin expanded beads of the present invention

includes, after the blowing agent impregnation step, an expanding step of discharging the blowing agent-containing polypropylene-based resin particles out of the container along with the aqueous medium to expand them.

The pressure (inner pressure) inside the closed vessel during expanding is preferably 0.5 MPa(G) or more, more preferably 0.8 MPa(G) or more. The upper limit is preferably 4 MPa(G) or less, more preferably 3 MPa(G) or less. Within the range, desired expanded beads can be safely produced with no risk of breakage or explosion of the closed vessel. Also preferably, the closed vessel is heated preferably up to 100 to 200°C, more preferably up to 130 to 160°C, and then kept at the temperature for approximately 5 to 30 minutes, and thereafter the blowing agent-containing resin particles are taken out of the closed vessel and discharged into an atmosphere having a lower pressure than the inner pressure inside the closed vessel (for example, an atmospheric pressure) to expand the resin particles.

The polypropylene-based resin expanded beads obtained in the manner as above can be pressurized by air or the like to increase the pressure (inner pressure) inside the cells of the expanded beads, and then heated by steaming and expanded (two-stage expanding) to give expanded beads having a high expansion ratio (having a low bulk density).

[Molded article of polypropylene-based resin expanded beads]

The molded article of polypropylene-based resin expanded beads of the present invention is an in-mold molded article of the expanded beads. The molded article of polypropylene-based resin expanded beads of the present invention is formed by in-mold molding of the expanded beads.

Specifically, the polypropylene-based resin expanded beads containing a hindered amine compound having a repeating unit represented by the above-mentioned general formula (I) and having a polystyrene-equivalent number-average molecular weight of 1000 or more and 2000 or less, in an amount of 0.01% by mass or more and 2% by mass or less are in-mold molded to give the molded article.

Namely, the polypropylene-based resin expanded beads containing a hindered amine compound, in which the hindered amine compound has a repeating unit represented by the general formula (I), the polystyrene-equivalent number-average molecular weight of the hindered amine compound is 1000 or more and 2000 or less, and the content of the hindered amine compound in the polypropylene-based resin expanded beads is 0.01% by mass or more and 2% by mass or less, are in-mold molded to give the molded article.

Accordingly, the molded article of polypropylene-based resin expanded beads of the present invention contains the hindered amine compound having a repeating unit represented by the general formula (I) and having a polystyrene-equivalent number-average molecular weight of 1000 or more and 2000 or less, in an amount of 0.01% by mass or more and 2% by mass or less.

Preferably, the molded article of polypropylene-based resin expanded beads of the present invention is obtained by in-mold molding the above-mentioned expanded beads.

The in-mold molding method can be carried out by filling a mold with expanded beads and heating them using a heating medium such as steam. Specifically, after expanded beads have been filled in a mold, a heating medium such as steam is introduced into the mold to fuse the expanded beads together, while heating and expanding them, thereby forming a molded article of expanded beads given a shape of the molding space. Also in the in-mold molding in the present invention, the expanded beads can be molded according to a pressure molding method which is such that, after the pressure inside the expanded beads has been controlled to be higher by 0.01 to 0.3 MPa than the atmospheric pressure by previously pressurizing the expanded particles by a gas such as air under pressure to increase the pressure inside the cells of the expanded beads, the expanded beads are filled in a mold under atmospheric pressure or under reduced pressure, and thereafter a heating medium such as steam is introduced into the mold to heat and fuse the expanded beads (for example, JP51-22951B). Also, the expanded beads can be molded according to a compression filling molding method which is such that expanded beads are filled in a mold that has been pressurized to have a higher pressure than atmospheric pressure, in which the expanded beads have been pressurized to have a higher pressure than the pressurized pressure inside the mold, and then a heating medium such as steam is introduced into the cavity of the mold to heat and fuse the expanded beads (JP4-46217B). In addition, the expanded beads can also be molded according to a normal pressure filling molding method in which expanded beads prepared under a specific condition to have a high secondary expanding force are filled in the cavity of a mold under atmospheric pressure or under reduced pressure, and then a heating medium such as steam is introduced thereinto to heat and fuse expanded beads (JP6-49795B), or according to a method of a combination of the above-mentioned methods (JP6-22919B).

The density of the molded article of polypropylene-based resin expanded beads of the present invention is preferably 10 kg/$m^3$ or more and 500 kg/$m^3$ or less, more preferably 12 kg/$m^3$ or more, even more preferably 15 kg/$m^3$ or more. Also preferably, the density is more preferably 200 kg/$m^3$ or less, more preferably 100 kg/$m^3$ or less, even more preferably 50 kg/$m^3$ or less. The density of the molded article of expanded beads falling within the range is preferred, since a molded article of expanded beads that is lightweight and is excellent in mechanical properties can be stably obtained.

The density of the molded article of expanded beads can be calculated by dividing the mass of the molded

article of expanded beads by the volume to be calculated based on the dimension thereof, and can be measured according to the method described in the section of Examples.

The ratio of the tensile strength of the molded article of polypropylene-based resin expanded beads of the present invention to the density of the molded article of polypropylene-based resin expanded beads [tensile strength/density] is preferably 0.016 MPa/[kg/$m^3$] or more, more preferably 0.017 MPa/[kg/$m^3$] or more, even more preferably 0.018 MPa/[kg/$m^3$] or more. The upper limit is not limited, and is practicably 0.030 MPa/[kg/$m^3$] or less, preferably 0.025 MPa/[kg/$m^3$] or less. The ratio of the tensile strength of the molded article of expanded beads to the density of the molded article of expanded beads falling within the range is preferred, since a molded article having a good fusion bonding condition, excellent in mechanical properties and capable of stably expressing long-term weather resistance can be obtained.

The tensile strength of the molded article of expanded beads means that, relative to the fusion bonding condition of the expanded beads therein, among molded articles having the same density, one having a higher tensile strength has better fusion bonding properties of the expanded beads that constitute the molded article. On the other hand, the tensile strength of the molded article depends on the density of the molded article, and therefore, by employing the ratio of the tensile strength of the molded article of expanded beads relative to the density thereof, the fusion bonding condition of the molded article can be suitably evaluated.

The tensile strength can be measured according to JIS K6767:1999, and for example, it can be measured according to the method described in the section of Examples. The tensile strength means a maximum tensile stress having occurred until breakage of a test piece in a tensile test. By dividing the measured tensile strength value by the above-mentioned density value, a ratio of tensile strength to density (tensile strength per unit density) can be calculated.

The tensile elongation of the molded article of polypropylene-based resin expanded beads of the present invention is preferably 10% or more, more preferably 15% or more, even more preferably 18% or more, particularly preferably 20% or more. The upper limit is not limited, and is practicably 40% or less, preferably 35% or less. When the tensile elongation of the molded article of expanded beads falls within the range, a molded article having a good fusion bonding condition of the expanded beads therein, in which even the expanded beads in the deep area of the molded article can bond by fusion in a good condition can be obtained. With that, favorably, the molded article can be excellent in durability.

The tensile elongation can be measured according to JIS K6767:1999, and for example, it can be measured according to the method described in the section of Examples. The tensile elongation means an elongation ratio of a test piece when the test piece has cut off in a tensile test.

The molded article of polypropylene-based resin expanded beads of the present invention is excellent in long-term weather resistance and in mechanical properties, and therefore can be used in a wide range of fields of food transport containers, packaging/buffering materials for electric/electronic components, vehicle members such as automobile bumpers, building members such as residential heat insulating materials, and miscellaneous goods, as shock absorbing materials, heat insulating materials, various packaging materials and others.

## Examples

Next, the present invention is described in further detail with reference to Examples, but the invention is not whatsoever restricted by these Examples.

### [Measurement and Evaluation]

The hindered amine compounds and the resins used in Examples and Comparative Examples, and the expanded beads and the molded articles of expanded beads were measured and evaluated as follows. For evaluating the expanded beads and the molded articles of expanded beads, these were left and conditioned under the condition of a relative humidity 50%, 23°C and 1 atm for 2 days, and then tested for evaluation.

### <Number-Average Molecular Weight of Hindered Amine Compound>

The number-average molecular weight of a hindered amine compound is a number-average molecular weight thereof calculated by gel permeation chromatography (GPC) using monodisperse polystyrene as a standard substance.

### <Bulk Density of Expanded Beads>

About 500 $cm^3$ of a group of expanded beads were filled in a measuring cylinder, and the bulk height of the expanded beads group in the measuring cylinder was stabilized by lightly beating a few times the bottom of the measuring cylinder against the floor face. The bulk volume of the expanded beads group that the scale of the measuring cylinder

indicated was read, and this was referred to as V1 (L). Next, the mass of the expanded beads group was measured, and this was referred to as W1 [g].

The mass W1 [g] of the expanded beads was divided by the volume V1 thereof (W1/V1), and the unit thereof was converted into [kg/$m^3$] to give the bulk density of the expanded beads.

<Total heat of fusion and high-temperature peak heat of fusion of expanded beads>

The total heat of fusion and the high-temperature peak heat of fusion of expanded beads were measured by heat flux differential scanning calorimetry according to JIS K7122-1987. Specifically, about 2 mg of expanded beads were sampled, and heated from 23°C up to 200°C at 10°C/min for measurement to draw a DSC curve having one or more melting peaks, using a differential scanning calorimeter (DSC7020, by Hitachi High-Tech Corporation). In the following description, a resin-intrinsic peak is represented by A, and a high-temperature peak appearing on the higher temperature side than it is represented by B.

A straight line connecting a point $\alpha$ corresponding to 80°C on the DSC curve and a point $\beta$ on the DSC curve corresponding to the melting end temperature T of the expanded beads was drawn ($\alpha$-$\beta$). The melting end temperature T is an endpoint on the high temperature side at the high-temperature peak B, and is an intersection point of the high-temperature peak and the high-temperature side base line. Next, from the point $\gamma$ on the DSC curve equivalent to the valley between the resin-intrinsic peak A and the high-temperature peak B, a straight line parallel to the vertical axis of the graph was drawn, and the point crossing the straight line ($\alpha$-$\beta$) was referred to as $\delta$.

The area of the high-temperature peak B is an area of the part surrounded by the curve of the high-temperature peak B part on the DSC curve, the line segment ($\alpha$-$\beta$) and the line segment ($\gamma$-$\delta$), and this was referred to as a melting heat of fusion at the high-temperature peak.

The area of the total melting peak is an area of the part surrounded by the curve of the resin-intrinsic peak A part on the DSC curve, the curve of the high-temperature peak B part and the line segment ($\alpha$-$\beta$), and this was referred to as a total heat of fusion.

<Heat of fusion at high-temperature peak of the surface part of expanded beads ($\Delta$Hs) and heat of fusion at high-temperature peak of the inner part of expanded beads ($\Delta$Hi)>

In Examples and Comparative Examples, a section surrounded a range of 200 pm from the surface of an expanded bead to the center of gravity of the expanded bead was cut out from each of plural expanded beads to prepare a sample of about 2 mg. The sample was referred to as a surface part of expanded beads.

In Examples and Comparative Examples, an inner part of an expanded bead was cut out from each of plural expanded beads so as not to include the above-mentioned surface part to prepare a sample of about 2 mg. The sample was referred to as an inner part of expanded beads.

The surface part of expanded beads and the inner part of expanded beads were individually measured according to heat flux differential scanning calorimetry in the same manner as that for the above-mentioned <Total heat of fusion and high-temperature peak heat of fusion of expanded beads> to determine a high-temperature peak heat of fusion.

The high-temperature peak heat of fusion of the surface part of expanded beads was referred to as $\Delta$Hs, and the high-temperature peak heat of fusion of the inner part of expanded beads was as $\Delta$Hi. With that, a value of 0.86 times $\Delta$Hi was calculated to be $\Delta$Hi $\times$ 0.86. The results are shown in Table 1.

<Average cell diameter of expanded beads>

The average cell diameter of expanded beads was measured as follows.

30 expanded beads were randomly chosen from a group of expanded beads. The expanded bead was cut into two portions in such a manner that the cutting line could pass through the center part thereof, and an enlarged photograph of one cross section of every bead was taken. On every cross section photograph, four line segments were drawn from the outermost surface on one side to the outermost surface on the other side passing through the center part in such a manner that the angle formed by the neighboring two line segments could be equiangular to each other. The number of the cells crossing each line segment was counted, and total length of the four line segments was divided by the total number of cells crossing the line segments to determine the cell diameter of each expanded bead, and the found data were arithmetically averaged to give an average cell diameter of the expanded beads.

<Average surface layer thickness of expanded beads>

30 expanded beads were randomly chosen from a group of expanded beads. The expanded bead was cut into two portions in such a manner that the cutting line could pass through the center part thereof, and an enlarged photograph

of one cross section of every bead was taken. On every cross section photograph, eight line segments were drawn from the outermost surface on one side to the outermost surface on the other side passing through the center part in such a manner that the angle formed by the neighboring two line segments could be equiangular to each other. On the eight line segments, the length from the outermost surface of the expanded bead to the end on the outermost surface side of the cell existing on the outermost surface side of the expanded bead (outermost surface resin layer thickness) was measured, and the found data were arithmetically averaged to give an average value of the outermost surface resin layer thickness of each expanded bead (average surface layer thickness of each expanded bead). With that, the data of the average value of the outermost surface thickness of the 30 expanded beads were arithmetically averaged to give an average surface layer thickness of the expanded beads.

<Density of molded article of expanded beads>

A molded article of expanded beads was left under the condition of a relative humidity 50%, 23°C and 1 atm for 2 days. Next, the mass thereof was measured, and was referred to as W [g].
Next, based on the dimension of the molded article of expanded beads, the volume V [$cm^3$] of the molded article of expanded beads was measured.
The mass W [g] of the molded article of expanded beads was divided by the volume V thereof (W/V), and the unit was converted into [$kg/m^3$] to determine the density of the molded article of expanded beads.

<Molding cycle evaluation>

In in-mold molding to form a molded article of expanded beads, the time from the time when the heating treatment was finished to the time when the pressure (surface pressure) generated on the inner surface of the mold became 0.04 MPa (G) (cooling time) was measured, and the molding cycle was evaluated according to the following criteria.

Evaluation Criteria

A: The cooling time was 40 seconds or less.
B: The cooling time was more than 40 seconds and 50 seconds or less.
C: The cooling time was more than 50 seconds and 60 seconds or less.
D: The cooling time was more than 60 seconds.

In the case where the cooling time was 50 seconds or less, more preferably 40 seconds or less, the time to be taken for cooling is short and the in-mold molding to give molded articles of expanded beads can be efficiently carried out, and the case is especially excellent in molding cycle.
In molding cycle evaluation, the cooling time was measured in which good molded articles with expanded beads therein fusing together favorably with little shrinkage and few gaps on the surfaces of the molded articles were formed under a lowest molding pressure, and evaluated.

<Weather resistance of molded article of expanded beads>

A molded article was irradiated with light under the following condition according to JIS K 7350-2:2008. After irradiation with light, the molded article was tested in a tensile test to measure the mechanical properties (tensile strength, tensile elongation, tensile strength per density), and observed for the appearance change (change before light irradiation and after light irradiation) to evaluate the weather resistance of the molded article of expanded beads.

(Light irradiation condition)

Apparatus used: Eye Super Xenon Tester XER-W83 by Iwasaki Electric Co., Ltd.
Light source: Xenon arc lamp
Filter: Inner filter: quartz glass, outer filter: borate glass
Irradiance: 120 $W/m^2$
Irradiation time: 330 hours (corresponding to sunlight 0.5 years), or 1320 hours (corresponding to sunlight 2 years)

Black panel temperature: 63 °C
Spray cycle: Water spraying for 18 minutes in 120 minutes (after 102 minutes light irradiation, 18 minutes light irradiation with water spraying)
In-tank humidity: 50 %
Size of test piece: 150 × 70 × 10 mm

(Tensile test of molded article of expanded beads)

The tensile test for molded article of expanded beads was carried out under the following condition according to JIS K6767:1999.

Using a vertical slicer, a cut-out piece was prepared from the molded article of expanded beads or from the molded article of expanded beads after light irradiation under the above condition, so that all the surfaces were cut-out surfaces (by removing the skin portion). From the cut-out piece, a test piece having a shape of dumbbell No. 1 (length of the measurement part 40 mm, width 10 mm, thickness 10 mm) was prepared, using a scroll saw. The test piece was tested in a tensile test at a tension rate of 500 mm/min to measure the maximum load during the test and the gauge length at cutting. The maximum tension stress in the tensile test was referred to as a tensile strength, and the elongation at break of the test piece ([gauge length at cutting - gauge length before test] / [gauge length at cutting] × 100) was referred to as a tensile elongation. As the measurement apparatus, a Tensilon universal testing machine (by Orientec Corporation) was used. The tensile strength per density (ratio of the tensile strength of the molded article of expanded beads to the density of the molded article of expanded beads [tensile strength/density]) was calculated by dividing the maximum tensile strength by the density.

(Appearance valuation of molded article of expanded beads)

The appearance of the molded article of expanded beads was evaluated according to the following criteria, based on the appearance of the molded article before irradiation with light as a standard reference.

Appearance evaluation criteria

A: No change in appearance.
B: Chalking was seen on the surface.

[Materials]

Materials used in Examples and Comparative Examples are shown below. (Polypropylene-based resin)
FL7540L: FL7540L, by TPC Corporation, propylene-ethylene-butene copolymer, melting point 141°C, MFR (load 2.16 kg, 230°C, JIS K7210) 7 g/10 min

(Hindered amine compound)

UV-3529: Cyasorb UV-3529, by Solvay Corporation, NR-type hindered amine, poly{[6-morpholinyl-1,3,5-triazine-2,4-diyl][(1,2,2,6,6-pentamethyl-4-piperidyl)imino]hexamethylene[(1,2,2,6,6-pentamethyl-4-piperidyl)imino]}, compound represented by the following formula (IV), in the general formula (I), X is a hexamethylene group, Y is a morpholinyl group, $Z^1$ is a methyl group, and $Z^2$ is a methyl group; polystyrene-equivalent arithmetic average molecular weight 1700

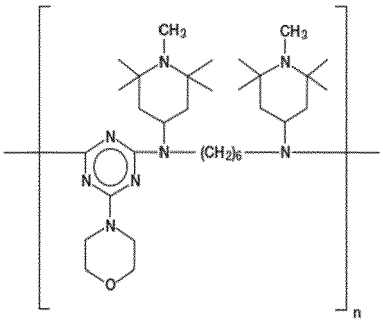

(IV)

NOR116: Flame stab NOR116, by BASF Corporation, NOR-type hindered amine, compound represented by the following formula (V), molecular weight 2261

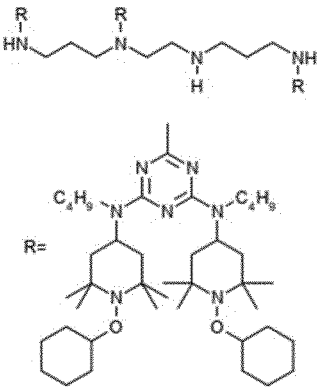

(V)

Tinuvin 622: Tinuvin 622, by BASF Corporation, NR-type hindered amine compound, dimethyl succinate-1-(2-hydroxyethyl)-4-hydroxy-2,2,6,6-tetramethylpiperidine condensation product, compound represented by the following formula (VI), polystyrene-equivalent arithmetic average molecular weight 3550

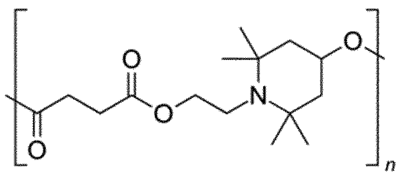

(VI)

UV70: Sabostab UV70, by Songwong Corporation, NH-type hindered amine, bis(2,2,6,6-tetramethyl-4-piperidyl) sebacate, compound represented by the following formula (VII), molecular weight 481

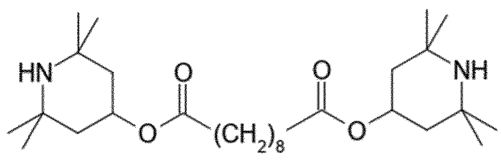

(VII)

[Production of polypropylene-based resin expanded beads and molded article of polypropylene-based resin expanded beads]

(Example 1)

An extruder having an inner diameter of 26 mm, attached with a strand-forming die on the discharge side, was prepared.

FL7540L, zinc borate as a cell controlling agent (number-based arithmetic average particle diameter: 7 pm) and UV-3529 were put into the extruder, and melted and kneaded to form a resin melt. UV-3529 was fed so that the

content of zinc borate in the expanded beads could be 500 ppm by mass and the content of UV-3529 in the expanded beads could be as in Table 1.

The resultant resin melt was extruded out as strands through the strand-forming die, and the extruded strands were cooled in water, and pelletized with a pelletizer to give polypropylene-based resin particles having an average mass per particle of 1.0 mg.

500 g of the polypropylene-based resin particles, 3.5 L of water as a dispersing medium, 3 g of kaolin as a dispersant, and 0.2 g of sodium dodecylbenzenesulfonate (trade name: Neogen, by DKS Co., Ltd.) as a surfactant were charged into a 5-L pressure resistance closed vessel.

Next, carbon dioxide as a blowing agent was injected under pressure into the closed vessel, which was then pressurized up to a gauge pressure 2.5 MPa (G). Next, while stirred, the contents in the closed vessel were heated up to an expanding temperature (146°C) at a heating rate of 2°C/min. Further, this was kept at the temperature for 15 minutes. Depending on the holding temperature and the holding time, a high-temperature peak heat of fusion (derived from the endothermic curve in DSC measurement) can be controlled. Subsequently, the contents in the closed vessel were depressurized under atmospheric pressure to give polypropylene-based resin expanded beads. The measurement results of physical properties of the resultant polypropylene-based resin expanded beads are shown in Table 1.

The polypropylene-based resin expanded beads were charged into a plate-forming mold with length 250 mm × width 200 mm × thickness 50 mm, and in-mold molded by pressure molding with steam heating to give a molded article of expanded beads in the form of a plate. Regarding the heating method, the drain valves on both sides of the mold were kept open, steam was supplied for 5 seconds for preheating (ventilation step). Subsequently, steam was supplied from one side of the mold to heat the expanded beads, and further, steam was supplied from the other side of the mold to further heat them. Subsequently, steam was supplied from both sides of the mold under a mold heating steam pressure of 0.24 MPa(G) to heat the expanded beads (main heating). After the main heating, the mold was depressurized and cooled with water until the pressure (surface pressure) generated on the molding surface of the mold by the expanding force of the molded article could reach 0.04 MPa(G), and thereafter the mold was opened to take out the molded article from the mold. The molded article taken out from the mold was cured in an oven at 80°C for 12 hours, and then left cooled down to room temperature to give a molded article of expanded beads.

The results of molding cycle evaluation and weather resistance evaluation of the resultant molded article of expanded beads are shown in Table 1.

(Example 2)

Polypropylene-based resin expanded beads were produced in the same manner as in Example 1 except that the amount of UV-3529 was changed so that the content of UV-3529 in the expanded beads could be as in Table 1. The measurement results of the physical properties of the resultant polypropylene-based resin expanded beads are shown in Table 1.

Using the polypropylene-based resin expanded beads obtained herein, a molded article of expanded beads was produced in the same manner as in Example 1. The results of molding cycle evaluation and weather resistance evaluation of the resultant molded article of expanded beads are shown in Table 1.

(Example 3)

Polypropylene-based resin expanded beads were produced in the same manner as in Example 1 except that the amount of UV-3529 was changed so that the content of UV-3529 in the expanded beads could be as in Table 1. The measurement results of the physical properties of the resultant polypropylene-based resin expanded beads are shown in Table 1.

Using the polypropylene-based resin expanded beads obtained herein, a molded article of expanded beads was produced in the same manner as in Example 1. The results of molding cycle evaluation and weather resistance evaluation of the resultant molded article of expanded beads are shown in Table 1.

(Example 4)

After the operation of the expanding step in Example 1, the following two-stage expanding step was carried out.

The polypropylene-based resin expanded beads obtained in the expanding step in Example 1 were cured at 60°C for 12 hours, and the resultant expanded beads (hereinafter referred to as first-stage expanded beads) were filled in a pressure resistance closed vessel, the pressure inside the closed vessel was increased from normal pressure (atmospheric pressure) to pressurize the expanded beads up to 0.6 MPa (G). The pressurized condition of the expanded beads was kept for 12 hours to increase the pressure inside the cells of the expanded beads. Afterwards, the first-stage expanded beads were taken out of the closed vessel, and the internal pressure of the cells in the resultant first-stage

expanded beads was 0.5 MPa (G). Subsequently, the first-stage expanded beads were transferred into a second-stage expanding device. Steam was supplied into the device to expand the first-stage expanded beads to give polypropylene-based resin expanded beads (second-stage expanded beads) having a bulk density of 27 kg/$m^3$. The measurement results of the physical properties of the resultant polypropylene-based resin expanded beads are shown in Table 1.

The resultant polypropylene-based resin expanded beads were put in a pressure resistance closed vessel and pressurized therein so as to increase the pressure inside the cells up to 0.05 MPa (G). A molded article of expanded beads was obtained by in-mold molding in the same manner as in Example 1, except that the expanded beads herein were used in place of the expanded beads used in Example 1 and that the steam pressure for heating and molding in the main heating was changed to 0.18 MPa (G). The results of molding cycle evaluation and weather resistance evaluation of the resultant molded article of expanded beads are shown in Table 1.

(Comparative Example 1)

Polypropylene-based resin expanded beads were produced in the same manner as in Example 1 except that UV-3529 was not used. The measurement results of the physical properties of the resultant polypropylene-based resin expanded beads are shown in Table 1.

Using the polypropylene-based resin expanded beads obtained herein, a molded article of expanded beads was produced in the same manner as in Example 1. The results of molding cycle evaluation and weather resistance evaluation of the resultant molded article of expanded beads are shown in Table 1. In the tensile test after irradiation with light for 1320 hours (corresponding to sunlight 2 years), the molded article was broken in preparing test pieces, and therefore the tensile test failed.

(Comparative Example 2)

Polypropylene-based resin expanded beads were produced in the same manner as in Example 1 except that UV-3529 was changed to NOR116. The measurement results of the physical properties of the resultant polypropylene-based resin expanded beads are shown in Table 1.

Using the polypropylene-based resin expanded beads obtained herein, a molded article of expanded beads was produced in the same manner as in Example 1. The results of molding cycle evaluation and weather resistance evaluation of the resultant molded article of expanded beads are shown in Table 1.

(Comparative Example 3)

Polypropylene-based resin expanded beads were produced in the same manner as in Example 1 except that UV-3529 was changed to Tinuvin 622. The measurement results of the physical properties of the resultant polypropylene-based resin expanded beads are shown in Table 1.

Using the polypropylene-based resin expanded beads obtained herein, a molded article of expanded beads was produced in the same manner as in Example 1. The results of molding cycle evaluation and weather resistance evaluation of the resultant molded article of expanded beads are shown in Table 1.

(Comparative Example 4)

Polypropylene-based resin expanded beads were produced in the same manner as in Example 1 except that UV-3529 was changed to UV70. The measurement results of the physical properties of the resultant polypropylene-based resin expanded beads are shown in Table 1.

Using the polypropylene-based resin expanded beads obtained herein, a molded article of expanded beads was produced in the same manner as in Example 1. The results of molding cycle evaluation and weather resistance evaluation of the resultant molded article of expanded beads are shown in Table 1.

(Comparative Example 5)

Polypropylene-based resin expanded beads were produced in the same manner as in Example 1 except that the amount of UV-3529 was changed so that the content of UV-3529 in the expanded beads could be as in Table 1. The measurement results of the physical properties of the resultant polypropylene-based resin expanded beads are shown in Table 1.

Using the polypropylene-based resin expanded beads obtained herein, a molded article of expanded beads was produced in the same manner as in Example 1. The results of molding cycle evaluation and weather resistance evaluation of the resultant molded article of expanded beads are shown in Table 1.

Table 1

| | | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|
| Expanded Beads | Hindered Amine Compound | Kind | UV-3529 | UV-3529 | UV-3529 | UV-3529 | - | NOR 116 | Tinuvin 622 | UV70 | UV-3529 |
| | | Molecular Weight | 1700 | 1700 | 1700 | 1700 | - | 2261 | 3550 | 481 | 1700 |
| | | Content (mass%) | 0.4 | 0.8 | 0.2 | 0.4 | - | 0.4 | 0.4 | 0.4 | 3 |
| | Bulk Density ($kg/m^3$) | | 45 | 48 | 48 | 27 | 46 | 49 | 48 | 54 | 48 |
| | Total Heat of Fusion (J/g) | | 79 | 78 | 78 | 78 | 75 | 82 | 80 | 79 | 77 |
| | High-Temperature Peak Heat (J/g) | | 14 | 14 | 14 | 14 | 12 | 16 | 13 | 15 | 14 |
| | Heat of Fusion at high-temperature peak in the surface layer part of the beads and inside the beads | ΔHs (J/g) | 15 | 15 | 15 | 15 | 14 | 16 | 15 | 16 | 15 |
| | | ΔHi (J/g) | 14 | 14 | 14 | 14 | 13 | 15 | 14 | 15 | 14 |
| | | ΔHi×0.86 (J/g) | 12 | 12 | 12 | 12 | 11 | 13 | 12 | 13 | 12 |
| | Average Cell Diameter (μm) | | 73 | 70 | 90 | 130 | 130 | 79 | 168 | 90 | 70 |
| | Average Surface Layer Thickness (μm) | | 11 | 10 | 13 | 10 | 18 | 13 | 25 | 16 | 10 |

Table 1 (continued)

| | | | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|---|---|
| Molded article of expanded beads | Density ($kg/m^3$) | | | 55 | 60 | 60 | 30 | 60 | 59 | 57 | 65 | 60 |
| | Molding Cycle (sec) | | | 30 | 30 | 33 | 55 | 55 | 52 | 70 | 50 | 30 |
| | | | | A | A | A | C | C | C | D | B | A |
| | Weather Resistance | Before Light Irradiation | Tensile Strength (MPa) | 1.0 | 1.0 | 1.0 | 0.6 | 1.1 | 0.90 | 1.1 | 1.1 | 0.85 |
| | | | Tensile Elongation (%) | 26 | 26 | 26 | 30 | 26 | 17 | 24 | 21 | 16 |
| | | | Tensile Strength/Density (MPa/[$kg/m^3$]) | 0.018 | 0.017 | 0.017 | 0.019 | 0.018 | 0.015 | 0.019 | 0.017 | 0.014 |
| | | After Light Irradiation (corresponding to 0.5 y) | Tensile Strength (MPa) | 0.88 | 0.92 | 0.85 | 0.50 | 0.37 | 0.78 | 0.88 | 0.96 | 0.75 |
| | | | Tensile Strength relative to before light irradiation (%) | 88 | 92 | 85 | 86 | 34 | 87 | 82 | 86 | 88 |
| | | | Tensile Elongation (%) | 17 | 20 | 18 | 21 | 10 | 14 | 17 | 15 | 14 |
| | | | Appearance Evaluation | A | A | A | A | B | A | A | A | A |
| | | After Light Irradiation (corresponding to 2.0 y) | Tensile Strength (MPa) | 0.66 | 0.73 | 0.60 | 0.40 | Samples broken. Tensile test failed. | 0.56 | 0.55 | 0.49 | 0.65 |
| | | | Tensile Strength relative to before light irradiation (%) | 66 | 73 | 60 | 69 | | 62 | 51 | 44 | 76 |
| | | | Tensile Elongation (%) | 14 | 17 | 12 | 18 | | 11 | 11 | 9 | 10 |
| | | | Appearance Evaluation | A | A | A | A | B | A | B | B | A |

From the results shown in Table 1, it is known that the molded articles of expanded beads of Examples are excellent in the tensile elongation and the tensile strength in the tensile test, and further, even in the weathering test under the condition corresponding to sunlight irradiation for about 2 yours, they maintained the mechanical properties with no change of appearance. From these, the polypropylene-based resin expanded beads of the present invention can form molded articles of expanded beads excellent in long-term weather resistance and excellent in mechanical properties, and the molded article of polypropylene-based resin expanded beads of the present invention is excellent in long-term weather resistance and excellent in mechanical properties.

(Example 5)

Polypropylene-based resin expanded beads were produced in the same manner as in Example 1, except that, in preparation of polypropylene-based resin particles, carbon black (furnace black, primary particle size: 15 nm) was fed into the extruder in addition to FL7540L, zinc borate and UV-3529 thereinto, and a resin melt was prepared by melt-kneading the mixture.

In production of the polypropylene-based resin particles, UV-3529 was fed so that the content of zinc borate in the expanded beads could be 500 ppm by mass and the content of UV-3529 in the expanded beads could be as in Table 2, and carbon black was fed so that the content of carbon black in the expanded beads could be 2.6% by mass.

The measurement results of the physical properties of the resultant polypropylene-based resin expanded beads are shown in Table 2.

(Example 6)

Polypropylene-based resin expanded beads were produced in the same manner as in Example 1, except that, in preparation of polypropylene-based resin particles, a UV absorbent (Chimassorb 81) was fed into the extruder in addition to FL7540L, zinc borate and UV-3529 thereinto, and a resin melt was prepared by melt-kneading the mixture.

In production of the polypropylene-based resin particles, UV-3529 was fed so that the content of zinc borate in the expanded beads could be 500 ppm by mass and the content of UV-3529 in the expanded beads could be as in Table 2, and the UV absorbent (Chimassorb 81) was fed so that the content of the UV absorbent (Chimassorb 81) in the expanded beads could be 0.2% by mass. The UV absorbent (Chimassorb 81) is Chimassorb 81 (benzophenone compound: 2-hydroxy-4-(octyloxy)benzophenone, by BASF Corporation).

The measurement results of the physical properties of the resultant polypropylene-based resin expanded beads are shown in Table 2.

(Example 7)

Polypropylene-based resin expanded beads were produced in the same manner as in Example 1, except that, in preparation of polypropylene-based resin particles, a UV absorbent (Tinuvin 326) was fed into the extruder in addition to FL7540L, zinc borate and UV-3529 thereinto, so that the content of the UV absorbent (Tinuvin 326) in the expanded beads could be 0.2% by mass, and a resin melt was prepared by melt-kneading the mixture.

In production of the polypropylene-based resin particles, UV-3529 was fed so that the content of zinc borate in the expanded beads could be 500 ppm by mass and the content of UV-3529 in the expanded beads could be as in Table 2, and the UV absorbent (Tinuvin 326) was fed so that the content of the UV absorbent (Tinuvin 326) in the expanded beads could be 0.2% by mass. The UV absorbent (Tinuvin 326) is Tinuvin 326 (benzotriazole compound: 2-t-butyl-6-(5-chloro-2H-benzotriazol-2-yl)-4-methylphenol, by BASF Corporation).

The measurement results of the physical properties of the resultant polypropylene-based resin expanded beads are shown in Table 2.

Table 2

| | | | | Example 5 | Example 6 | Example 7 |
|---|---|---|---|---|---|---|
| Expanded Beads | Hindered Amine Compound | | Kind | UV-3529 | UV-3529 | UV-3529 |
| Expanded Beads | Hindered Amine Compound | | Molecular Weight | 1700 | 1700 | 1700 |
| Expanded Beads | Hindered Amine Compound | | Content (mass%) | 0.4 | 0.2 | 0.2 |
| Expanded Beads | UV Absorbent | | Kind | - | Chimassorb 81 | Tinuvin 326 |
| Expanded Beads | UV Absorbent | | Content (mass%) | - | 0.2 | 0.2 |
| Expanded Beads | Carbon Black | | Content (mass%) | 2.6 | - | - |
| Expanded Beads | Bulk Density (kg/m$^3$) | | | 46 | 48 | 47 |
| Expanded Beads | Total Heat of Fusion (J/g) | | | 72 | 73 | 77 |
| Expanded Beads | High-Temperature Peak Heat (J/g) | | | 14 | 14 | 14 |
| Expanded Beads | Heat of Fusion at high-temperature peak in the surface layer part of the beads and inside the beads | | ΔHs (J/g) | 15 | 15 | 15 |
| Expanded Beads | Heat of Fusion at high-temperature peak in the surface layer part of the beads and inside the beads | | ΔHi (J/g) | 14 | 14 | 14 |
| Expanded Beads | Heat of Fusion at high-temperature peak in the surface layer part of the beads and inside the beads | | ΔHi×0.86 (J/g) | 12 | 12 | 12 |
| Expanded Beads | Average Cell Diameter (μm) | | | 60 | 62 | 61 |
| Expanded Beads | Average Surface Layer Thickness (μm) | | | 11 | 10 | 8 |
| Molded article of expanded beads | Density (kg/m$^3$) | | | 55 | 57 | 57 |
| Molded article of expanded beads | Molding Cycle (sec) | | | 30 | 50 | 50 |
| Molded article of expanded beads | Molding Cycle (sec) | | | A | B | B |
| Molded article of expanded beads | Weather Resistance | Before Light Irradiation | Tensile Strength (MPa) | 1.0 | 0.95 | 1.0 |
| Molded article of expanded beads | Weather Resistance | Before Light Irradiation | Tensile Elongation (%) | 23 | 23 | 23 |
| Molded article of expanded beads | Weather Resistance | Before Light Irradiation | Tensile Strength/Density (MPa/[kg/m$^3$]) | 0.018 | 0.016 | 0.018 |
| Molded article of expanded beads | Weather Resistance | After Light Irradiation (corresponding to 0.5 y) | Tensile Strength (MPa) | 0.98 | 0.87 | 0.99 |
| Molded article of expanded beads | Weather Resistance | After Light Irradiation (corresponding to 0.5 y) | Tensile Strength relative to before light irradiation (%) | 98 | 92 | 99 |
| Molded article of expanded beads | Weather Resistance | After Light Irradiation (corresponding to 0.5 y) | Tensile Elongation (%) | 22 | 20 | 23 |
| Molded article of expanded beads | Weather Resistance | After Light Irradiation (corresponding to 0.5 y) | Appearance Evaluation | A | A | A |
| Molded article of expanded beads | Weather Resistance | After Light Irradiation (corresponding to 2.0 y) | Tensile Strength (MPa) | 0.92 | 0.83 | 0.91 |
| Molded article of expanded beads | Weather Resistance | After Light Irradiation (corresponding to 2.0 y) | Tensile Strength relative to before light irradiation (%) | 92 | 87 | 91 |
| Molded article of expanded beads | Weather Resistance | After Light Irradiation (corresponding to 2.0 y) | Tensile Elongation (%) | 22 | 20 | 21 |
| Molded article of expanded beads | Weather Resistance | After Light Irradiation (corresponding to 2.0 y) | Appearance Evaluation | A | A | A |

Also from the results in Table 2, it is known that the molded articles of expanded beads of Examples are excellent in the mechanical properties such as the tensile elongation and the tensile strength in the tensile test, and further, even in the weathering test under the condition corresponding to sunlight irradiation for about 2 yours, they maintained the mechanical properties with no change of appearance.

## Claims

**1.** Polypropylene-based resin expanded beads containing a hindered amine compound, wherein:

the hindered amine compound has a repeating unit represented by the following general formula (I), and the polystyrene-equivalent number-average molecular weight of the hindered amine compound (measured in accordance with the method as detailed in the description) is 1000 or more and 2000 or less, and
the content of the hindered amine compound in the polypropylene-based resin expanded beads is 0.01% by mass or more and 2% by mass or less:

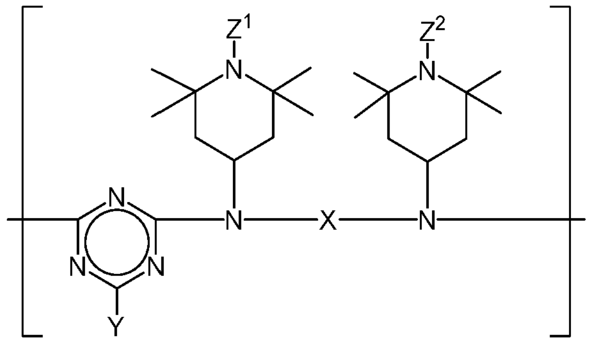

(I)

wherein X represents an alkylene group having 5 to 10 carbon atoms, Y represents an amino group, $Z^1$ and $Z^2$ each independently represent a hydrocarbon group, a hydrocarbon group bonding via an oxygen atom, or a hydrogen atom.

2. The polypropylene-based resin expanded beads according to claim 1, wherein the hindered amine compound is a hindered amine compound of the general formula (I) wherein $Z^1$ and $Z^2$ each are an alkyl group.

3. The polypropylene-based resin expanded beads according to claim 1 or 2, wherein Y in the general formula (I) is a morpholinyl group.

4. The polypropylene-based resin expanded beads according to any one of claims 1 to 3, wherein the average cell diameter (measured in accordance with the method as detailed in the description) of the polypropylene-based resin expanded beads is 50 um or more and 250 pm or less.

5. The polypropylene-based resin expanded beads according to any one of claims 1 to 4, wherein the average surface layer thickness (measured in accordance with the method as detailed in the description) of the polypropylene-based resin expanded beads is 5 pm or more and 20 pm or less.

6. The polypropylene-based resin expanded beads according to any one of claims 1 to 5, wherein the bulk density (measured accordance with the method as detailed in the description) of the polypropylene-based resin expanded beads is 10 $kg/m^3$ or more and 500 $kg/m^3$ or less.

7. A molded article of polypropylene-based resin expanded beads produced by in-mold molding the polypropylene-based resin expanded beads of any one of claims 1 to 6.

8. The molded article of polypropylene-based resin expanded beads according to claim 7, wherein the density of the molded article of polypropylene-based resin expanded beads is 10 $kg/m^3$ or more and 100 $kg/m^3$ or less, and the ratio of the tensile strength of the molded article of polypropylene-based resin expanded beads to the density of the molded article of polypropylene-based resin expanded beads [tensile strength/density] (measured in accordance with the method as detailed in the description) is 0.16 MPa/[$kg/m^3$] or more.

9. The molded article of polypropylene-based resin expanded beads according to claim 7 or 8, wherein the tensile elongation (measured in accordance with the method as detailed in the description) of the molded article of polypropylene-based resin expanded beads is 20% or more.

## Patentansprüche

1. Expandierte Kügelchen aus Polypropylen-basiertem Harz enthaltend eine gehinderte Aminverbindung, worin:

die gehinderte Aminverbindung eine Wiederholungseinheit der folgenden allgemeinen Formel (I) aufweist, und das zahlenmittlere Molekulargewicht der gehinderten Aminverbindung im Polystyroläquivalent, gemessen gemäß der Methode wie in der Beschreibung ausgeführt, 1000 oder mehr und 2000 oder weniger beträgt, und der Gehalt der gehinderten Aminverbindung an den expandierten Kügelchen aus Polypropylen-basiertem Harz 0,01 Massen-% oder mehr und 2 Massen-% oder weniger beträgt:

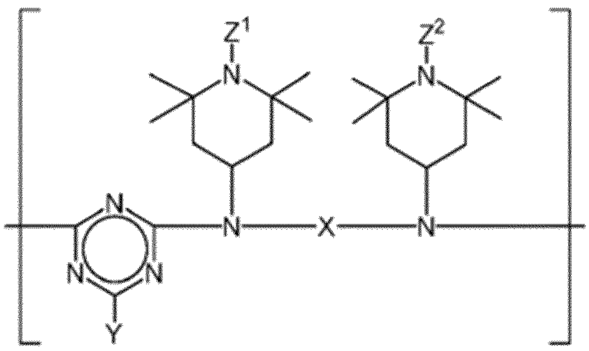

(I)

worin X eine Alkylengruppe mit 5 bis 10 Kohlenstoffatomen darstellt, Y eine Aminogruppe darstellt, $Z^1$ und $Z^2$ jeweils unabhängig voneinander eine Kohlenwasserstoffgruppe, eine über ein Sauerstoffatom gebundene Kohlenwasserstoffgruppe oder ein Wasserstoffatom darstellen.

**2.** Die expandierten Kügelchen aus Polypropylen-basiertem Harz gemäß Anspruch 1, worin die gehinderte Aminverbindung eine gehinderte Aminverbindung der allgemeinen Formel (I) ist worin $Z^1$ und $Z^2$ jeweils eine Alkylgruppe darstellen.

**3.** Die expandierten Kügelchen aus Polypropylen-basiertem Harz gemäß Anspruch 1 oder 2, worin Y in der allgemeinen Formel (I) eine Morpholinylgruppe darstellt.

**4.** Die expandierten Kügelchen aus Polypropylen-basiertem Harz gemäß einem von Anspruch 1 bis 3, worin der durchschnittliche Zelldurchmesser der expandierten Kügelchen aus Polypropylen-basiertem Harz, gemessen gemäß der Methode wie in der Beschreibung ausgeführt, 50 μm oder mehr und 250 μm oder weniger beträgt.

**5.** Die expandierten Kügelchen aus Polypropylen-basiertem Harz gemäß einem von Anspruch 1 bis 4, worin die durchschnittliche Oberflächenschichtdicke der expandierten Kügelchen aus Polypropylen-basiertem Harz, gemessen gemäß der Methode wie in der Beschreibung ausgeführt, 5 μm oder mehr und 20 μm oder weniger beträgt.

**6.** Die expandierten Kügelchen aus Polypropylen-basiertem Harz gemäß einem von Anspruch 1 bis 5, worin die Schüttdichte der expandierten Kügelchen aus Polypropylen-basiertem Harz, gemessen gemäß der Methode wie in der Beschreibung ausgeführt, 10 $kg/m^3$ oder mehr und 500 $kg/m^3$ oder weniger beträgt.

**7.** Ein Formkörper aus expandierten Kügelchen aus Polypropylen-basiertem Harz hergestellt durch In-Mold-Molding der expandierten Kügelchen aus Polypropylen-basiertem Harz gemäß einem von Anspruch 1 bis 6.

**8.** Der Formkörper aus expandierten Kügelchen aus Polypropylen-basiertem Harz gemäß Anspruch 7, worin die Dichte des Formkörpers aus expandierten Kügelchen aus Polypropylen-basiertem Harz 10 $kg/m^3$ oder mehr und 100 $kg/m^3$ oder weniger beträgt, und das Verhältnis der Zugfestigkeit des Formkörpers aus expandierten Kügelchen aus Polypropylen-basiertem Harz zu der Dichte des Formkörpers aus expandierten Kügelchen aus Polypropylen-basiertem Harz [Zugfestigkeit/Dichte], gemessen gemäß der Methode wie in der Beschreibung ausgeführt, 0.16 $MPa/[kg/m^3]$ oder mehr beträgt.

**9.** Der Formkörper aus expandierten Kügelchen aus Polypropylen-basiertem Harz gemäß Anspruch 7 oder 8, worin die Zugdehnung des Formkörpers aus expandierten Kügelchen aus Polypropylen-basiertem Harz, gemessen gemäß der Methode wie in der Beschreibung ausgeführt, 20% oder mehr beträgt.

## Revendications

**1.** Perles expansées en résine à base de polypropylène contenant un composé d'amine encombrée, dans lequel :

le composé d'amine encombrée a une unité de répétition représentée par la formule générale suivante (I), et le poids moléculaire moyen en nombre équivalent au polystyrène du composé d'amine encombrée (mesuré conformément à la méthode décrite dans la description) est 1000 ou plus et 2000 ou moins, et

la teneur en composé d'aminé encombrée dans les perles expansées en résine à base de polypropylène est 0,01 % en masse ou plus et 2 % en masse ou moins :

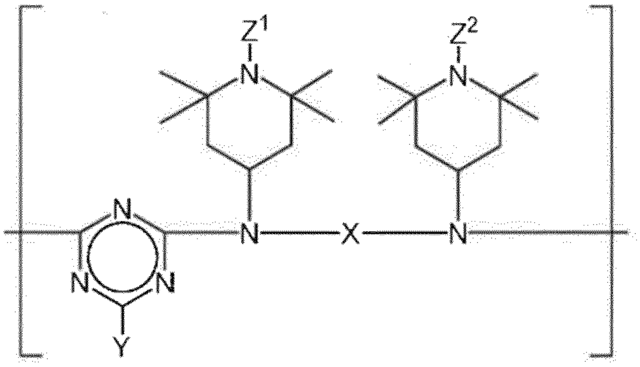

(I)

où X représente un groupe alkylène ayant 5 à 10 atomes de carbone, Y représente un groupe amino, $Z^1$ et $Z^2$ représentent chacun indépendamment un groupe hydrocarbure, un groupe hydrocarbure se liant par un atome d'oxygène, ou un atome d'hydrogène.

2. Perles expansées en résine à base de polypropylène selon la revendication 1, dans lesquelles le composé d'amine encombrée est un composé d'amine encombrée de la formule générale (I) dans laquelle $Z^1$ et $Z^2$ sont chacun un groupe alkyle.

3. Perles expansées en résine à base de polypropylène selon la revendication 1 ou 2, dans lesquelles Y dans la formule générale (I) est un groupe morpholinyle.

4. Perles expansées en résine à base de polypropylène selon l'une quelconque des revendications 1 à 3, dans lesquelles le diamètre moyen de cellule (mesuré conformément à la méthode décrite dans la description) des perles expansées en résine à base de polypropylène est 50 μm ou plus et 250 μm ou moins.

5. Perles expansées en résine à base de polypropylène selon l'une quelconque des revendications 1 à 4, dans lesquelles l'épaisseur moyenne de la couche de surface (mesurée conformément à la méthode décrite dans la description) des perles expansées en résine à base de polypropylène est 5 μm ou plus et 20 μm ou moins.

6. Perles expansées en résine à base de polypropylène selon l'une quelconque des revendications 1 à 5, dans lesquelles la densité en vrac (mesurée conformément à la méthode décrite dans la description) des perles expansées en résine à base de polypropylène est 10 $kg/m^3$ ou plus et 500 $kg/m^3$ ou moins.

7. Article moulé des perles expansées en résine à base de polypropylène produit par moulage dans le moule les perles expansées en résine à base de polypropylène de l'une quelconque des revendications 1 à 6.

8. Article moulé des perles expansées en résine à base de polypropylène selon la revendication 7, dans lequel la densité de l'article moulé des perles expansées en résine à base de polypropylène est 10 $kg/m^3$ ou plus et 100 $kg/m^3$ ou moins, et le rapport entre la résistance à la traction de l'article moulé de perles expansées en résine à base de polypropylène et la densité de l'article moulé des perles expansées en résine à base de polypropylène [résistance à la traction/densité] (mesuré conformément à la méthode décrite dans la description) est 0,16 $MPa/[kg/m^3]$ ou plus.

9. Article moulé des perles expansées en résine à base de polypropylène selon la revendication 7 ou 8, dans lequel l'allongement à la traction (mesuré conformément à la méthode décrite dans la description) de l'article moulé des perles expansées en résine à base de polypropylène est 20 % ou plus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003321567 A
- US 2017204240 A1
- JP 51022951 B
- JP 4046217 B
- JP 6049795 B
- JP 6022919 B